# EUROPÄISCHE PATENTSCHRIFT

(11) **EP 2 625 869 B1**
(45) Veröffentlichungstag und Bekanntmachung des Hinweises auf die Patenterteilung: **20.05.2015**
(21) Anmeldenummer: 11754850.3
(22) Anmeldetag: 25.08.2011
(51) Int. Cl.: H04Q 9/00, H04B 7/26

(54) **VERFAHREN ZUR ERMÖGLICHUNG EINER ZEITNAHEN DIAGNOSE EINES, AN EINEM WIRELESS ADAPTER ANGESCHLOSSENEN FELDGERÄTES**
METHOD FOR ENABLING REAL-TIME DIAGNOSIS OF A FIELD DEVICE CONNECTED TO A WIRELESS ADAPTER
PROCÉDÉ PERMETTANT DE DIAGNOSTIQUER RAPIDEMENT UN APPAREIL DE TERRAIN RACCORDÉ À UN ADAPTATEUR SANS FIL

(30) Priorität: 07.10.2010 DE 102010042116
(43) Veröffentlichungstag der Anmeldung: 14.08.2013
(73) Patentinhaber: Endress + Hauser Process Solutions AG, 4153 Reinach (CH)
(72) Erfinder: SEILER, Christian, 79424 Auggen (DE); FIEDLER, Marc, CH-4102 Binningen (CH); PROBST, Stefan, 79576 Weil am Rhein (DE); THOREN, Werner, 79585 Steinen (DE)
(74) Vertreter: Andres, Angelika Maria
(86) Internationale Anmeldenummer: PCT/EP2011/064655
(87) Internationale Veröffentlichungsnummer: WO 2012/045521

(56) Entgegenhaltungen:
- WO-A1-2005/103851
- WO-A1-2008/127657
- US-A1- 2009 207 017

## Beschreibung

Die vorliegende Erfindung betrifft ein Verfahren zum Betreiben eines Systems aufweisend ein Feldgerät, einen, an dem Feldgerät angeschlossenen Wireless Adapter, der mit dem Feldgerät in drahtgebundener Kommunikationsverbindung steht, und eine übergeordnete Kommunikationseinheit, die mit dem Wireless Adapter in drahtloser Kommunikationsverbindung steht.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotenzialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie z.B. Ventile oder Pumpen, über die der Durchfluss einer Flüssigkeit in einem Rohrleitungsabschnitt bzw. der Füllstand in einem Behälter geändert werden kann. Eine Vielzahl solcher Feldgeräte wird von der Firma Endress + Hauser hergestellt und vertrieben.

In modernen Industrieanlagen sind Feldgeräte oftmals über Bussysteme (Profibus®, Foundation® Fieldbus, HART®, etc.) mit einer Prozesssteuerungseinheit verbunden, die in Bezug auf die ihr zugeordneten Feldgeräte eine Prozesssteuerung ausführt. Neben einer drahtgebundenen Kommunikation besteht sowohl innerhalb eines Feldbus-Systems als auch losgelöst von diesem die Möglichkeit einer drahtlosen (engl.: wireless) Kommunikation (bzw. Kommunikation über Funk). Zur Realisierung einer drahtlosen Kommunikation sind neuere Feldgeräte teilweise als Funk-Feldgeräte ausgebildet. Daneben besteht die Möglichkeit, eine drahtlose Kommunikation in Bezug auf Daten eines Feldgerätes dadurch zu ermöglichen, dass ein Wireless Adapter, der eine Funkeinheit aufweist, an dem betreffenden Feldgerät angeschlossen wird. Beispielsweise ist in der Druckschrift WO 2005/103851 A1 ein Wireless Adapter beschrieben.

Zusätzlich oder alternativ zu der Möglichkeit, durch einen Wireless Adapter die Anbindung eines Feldgerätes an einen drahtlosen Feldbus herzustellen, besteht ferner die Möglichkeit, einen Wireless Adapter dazu einzusetzen, um Daten bezüglich des Feldgerätes drahtlos an eine entsprechende Kommunikationseinheit, die beispielsweise durch einen Host gebildet wird, zu übermitteln. Diese Übermittlung kann insbesondere über ein Fernübertragungsnetz erfolgen. Auf diese Weise können beispielsweise regelmäßig Bestandsdaten, die z.B. durch Messwerte des jeweiligen Feldgerätes gebildet werden, an die Kommunikationseinheit übermittelt und in der Kommunikationseinheit verwaltet werden. Hierzu ist insbesondere ein entsprechender Server auf der Kommunikationseinheit implementiert. Eine typische Anwendungsmöglichkeit ist beispielsweise, dass der Wireless Adapter zu ersten, vorbestimmten Zeiten jeweils Messwerte von dem daran angeschlossenen Feldgerät abfragt. Die abgefragten Messwerte werden gegebenenfalls in dem Wireless Adapter gesammelt. Sie werden zu zweiten, vorbestimmten Zeiten drahtlos an die Kommunikationseinheit übermittelt. Der Abstand zwischen den zweiten, vorbestimmten Zeiten ist insbesondere dann, wenn die Messwerte gesammelt übermittelt werden, deutlich höher als der Abstand zwischen den ersten, vorbestimmten Zeiten. Beispielsweise wird die gesammelte Übermittlung an die Kommunikationseinheit nur ein mal am Tag durchgeführt.

Oftmals besteht der Bedarf, die aus einem Feldgerät und einem, daran angeschlossenen Wireless Adapter gebildete Feldgerät-Wireless-Adapter-Einheit als autarke Einheit zu betreiben. In diesem Fall wird das Feldgerät durch den Wireless Adapter mit elektrischer Leistung versorgt. Um eine unnötige Belastung der Stromversorgungseinheit (z.B. Batterie, Akkumulator, etc.) des Wireless Adapters zu vermeiden, wird der Wireless Adapter insbesondere zu den Zeiten, zu denen er keine Kommunikation durchführt, (insbesondere außerhalb der ersten und zweiten, vorbestimmten Zeiten) ausgeschaltet. Auch das Feldgerät wird durch den Wireless Adapter nur dann mit elektrischer Leistung versorgt und angeschalten, wenn eine Kommunikation mit dem Wireless Adapter durchzuführen ist. Dieses zeitweise Abschalten des Wireless Adapters (und auch des Feldgerätes) führt jedoch zu einer erheblichen, zeitlichen Verzögerung bei der Analyse (bzw. Diagnose) und gegebenenfalls bei der Fehlerbehebung, falls in dem Feldgerät eine Statusänderung, insbesondere ein Fehler, auftritt.

Eine Statusänderung des Feldgerätes wird durch das Feldgerät in der Regel (je nach Feldbus-Protokoll) durch eine Status-Basisinformation mitgeteilt. Die Status-Basisinformation wird zum Beispiel zusammen mit einem Messwert des Feldgerätes an den Wireless Adapter übermittelt. Abgesehen davon, dass in dem Feldgerät eine Statusänderung aufgetreten ist, verfügt der Wireless Adapter in der Regel über keine weitergehenden Informationen. In der Regel setzt er insbesondere die Sammlung von Daten fort. Bei der Übermittlung der Daten bezüglich des Feldgerätes an die Kommunikationseinheit (was beispielsweise zu den zweiten, vorbestimmten Zeiten erfolgt) kann vorgesehen sein, dass dabei auch die Information, dass in dem Feldgerät eine Statusänderung aufgetreten ist, mit übermittelt wird. Die Kommunikationseinheit wird auf diese Weise jedoch erst relativ spät über die Statusänderung informiert. Ist beispielsweise in dem Feldgerät ein Fehler aufgetreten, so dass die bereitgestellten Messwerte nicht mehr gültig sind, so wurden durch den Wireless Adapter über einen erheblichen Zeitraum ungültige Messwerte gesammelt. Auch wird bei der dargestellten Betriebsweise eine Analyse der Statusänderung (Diagnose des Feldgerätes) und gegebenenfalls eine Fehlerbehebung über die Kommunikationseinheit, insbesondere durch eine, auf die Kommunikationseinheit zugreifende Anwendung (zum Beispiel durch ein Konfigurationstool), erschwert. Ein Zugriff auf den Wireless Adapter und gegebenenfalls eine Abfrage von weiteren Statusinformationen von dem Feldgerät, sowie gegebenenfalls eine Änderung von Parametereinstellungen des Feldgerätes werden insbesondere dadurch erschwert, dass der Wireless Adapter zu Zeiten, in denen keine planmäßige Übermittlung von Daten bezüglich des Feldgerätes stattfindet, nicht für eine Kommunikation mit der Kommunikationseinheit verfügbar ist. Dadurch kann sich eine, über die Kommunikationseinheit durchzuführende Analyse und/oder Fehlerbehebung bis zu der nächsten, planmäßigen Übermittlung von Daten zwischen dem Wireless Adapter und der Kommunikationseinheit verzögern, was Verzögerungen von bis zu einem Tag oder noch länger zur Folge haben kann. Weiterhin ist problematisch, das bei einer mitgeteilten Statusänderung des Feldgerätes nicht in jedem Fall eine weitergehende Analyse und/oder Fehlerbehebung durchzuführen ist. Für die Beurteilung, ob bei dem jeweils vorliegenden Status des Feldgerätes weitergehende Schritte, wie beispielsweise eine Analyse, eine Fehlerbehebung, etc., erforderlich sind, ist jedoch gerätespezifisches Wissen erforderlich.

Dementsprechend besteht die Aufgabe der vorliegenden Erfindung darin, ein Verfahren bereitzustellen, das im Falle einer Statusänderung eines, an einem Wireless Adapter angeschlossenen Feldgerätes eine zeitnahe und effektive Analyse (bzw. Diagnose) ermöglicht und gleichzeitig einen niedrigen Energieverbrauch der, aus dem Wireless Adapter und dem Feldgerät gebildeten Feldgerät-Wireless-Adapter-Einheit ermöglicht. Die Aufgabe besteht ferner in der Bereitstellung eines entsprechend ausgebildeten Wireless Adapters.

Die Aufgabe wird durch ein Verfahren gemäß Anspruch 1 sowie durch einen Wireless Adapter gemäß Anspruch 15 gelöst. Vorteilhafte Weiterbildungen der Erfindung sind in den Unteransprüchen angegeben.

Gemäß der vorliegenden Erfindung wird ein Verfahren zum Betreiben eines Systems, das ein Feldgerät, einen, an dem Feldgerät angeschlossenen Wireless Adapter, der mit dem Feldgerät in drahtgebundener Kommunikationsverbindung steht, und eine übergeordnete Kommunikationseinheit, die mit dem Wireless Adapter in drahtloser Kommunikationsverbindung steht, aufweist, bereitgestellt. Das Verfahren weist dabei nachfolgende Schritte auf:
A) Überwachen in dem Wireless Adapter, ob im Rahmen der Kommunikation mit dem Feldgerät eine Statusänderung des Feldgerätes mitgeteilt wird;
B) Ereignisgesteuertes Abfragen von erweiterten Statusinformationen von dem Feldgerät durch den Wireless Adapter, falls eine Statusänderung mitgeteilt wird; und
C) Ereignisgesteuertes Übermitteln der erweiterten Statusinformationen von dem Wireless Adapter an die übergeordnete Kommunikationseinheit und Bereitstellen dieser erweiterten Statusinformationen durch die übergeordnete Kommunikationseinheit an ein Auswertetool nur dann, falls ein Abgleich der erweiterten Statusinformationen mit einem, spezifisch für dieses Feldgerät angepassten Status-Muster ergibt, dass die betreffenden, erweiterten Statusinformationen auszuwerten sind, wobei der Abgleich in einer, an der Kommunikation zwischen dem Wireless Adapter und der übergeordneten Kommunikationseinheit beteiligten Kommunikationseinheit durchgeführt wird.

Dadurch, dass durch den Wireless Adapter unmittelbar dann, wenn eine Statusänderung des Feldgerätes mitgeteilt wird, erweiterte Statusinformationen von dem Feldgerät abgefragt werden, liegen dem Wireless Adapter ohne nennenswerte Verzögerung weitergehende Informationen bezüglich des Status des Feldgerätes vor. Indem ein Abgleich der erweiterten Statusinformationen mit einem, spezifisch für das betreffende Feldgerät angepassten Status-Muster durchgeführt wird, kann auf einfache Weise festgestellt werden, ob eine weitergehende Auswertung erforderlich ist oder nicht. Für die Durchführung des Abgleichs benötigt die betreffende Kommunikationseinheit keine umfangreichen, spezifischen Gerätekenntnisse bezüglich des jeweiligen Feldgerätes. Insbesondere benötigt sie keine Informationen zur Geräteintegration des Feldgerätes, was eine erheblich höhere Prozessorleistung und mehr Speicherplatz erfordern würde. Das Status-Muster kann einfach ausgestaltet werden, so dass dessen Hinterlegung wenig Speicherplatz benötigt und die Durchführung des Abgleichs nur eine niedrige Prozessorleistung erfordert. Dementsprechend können die im Feld eingesetzten Systemkomponenten (Feldgerät, Wireless Adapter) hinsichtlich der Prozessorleistung und dem Speicherplatz schlank ausgelegt sein. Eine Bereitstellung der erweiterten Statusinformationen an ein Auswertetool (deutsch: Auswerte-Werkzeug) erfolgt gemäß der vorliegenden Erfindung nur dann, falls der durchgeführte Abgleich ergibt, das die betreffenden, erweiterten Statusinformationen auszuwerten sind. Auf diese Weise kann eine unnötige Kommunikation (im Rahmen einer Analyse und/oder Fehlerbehebung) und damit ein unnötiger Energieverbrauch der Feldgerät-Wireless-Adapter-Einheit vermieden werden. Gleichzeitig wird durch das erfindungsgemäße Verfahren sichergestellt, dass im Falle einer Statusänderung, bei der eine Auswertung erforderlich ist, die erweiterten Statusinformationen, die den aktuellen Status des Feldgerätes weitergehend (als die Basis-Statusinformationen) charakterisieren, zeitnah an die übergeordnete Kommunikationseinheit übermittelt werden und für ein Auswertetool (zur Auswertung derselben) bereitgestellt werden.

Bei Schritt C) werden die erweiterten Statusinformationen nur dann an das Auswertetool bereitgestellt, falls der durchgeführte Abgleich ergibt, dass die erweiterten Statusinformationen auszuwerten sind. Ergibt hingegen der Abgleich, dass die erweiterten Statusinformationen nicht auszuwerten sind, so wird/werden bei Schritt C) der Schritt des ereignisgesteuerten Übermittelns und/oder des Bereitstellens nicht durchgeführt. An welcher Stelle des Kommunikationspfades von dem Wireless Adapter bis zu der übergeordneten Kommunikationseinheit die Weiterleitung der erweiterten Statusinformationen unterbrochen wird, hängt insbesondere davon ab, an welcher Stelle entlang dieses Kommunikationspfades der Abgleich durchgeführt wird.

Mit "Feldgerät" wird in dem vorliegenden Zusammenhang insbesondere auf einen Sensor und/oder Aktor Bezug genommen. Das erfindungsgemäße Verfahren ist insbesondere dann vorteilhaft, wenn das Feldgerät durch einen Sensor gebildet wird. Das Feldgerät kann dabei insbesondere als 2-Leiter-Gerät (Stromversorgung und Kommunikation erfolgen über eine gemeinsame **2-Leiter-**Verbindung) oder als 4-Leiter-Gerät (Stromversorgung erfolgt über eine 2-Leiter-Verbindung und Kommunikation erfolgt über eine separate 2-Leiter-Verbindung) ausgebildet sein. Die Kommunikation über die drahtgebundene Kommunikationsverbindung erfolgt insbesondere gemäß einem Feldbus-Protokoll (z.B. HART@, Foundation® Fieldbus, Profibus®, herstellerspezifisches Feldbus-Protokoll, etc.).

Der "Wireless Adapter" ist ein Gerät, das an (genau) ein Feldgerät anschließbar ist, das jeweils separat von dem betreffenden Feldgerät ausgebildet ist, durch das (über eine drahtgebundene Kommunikations-Schnittstelle des Wireless Adapters) mit dem Feldgerät eine drahtgebundene Kommunikation durchführbar ist, und das eine drahtlose Kommunikations-Schnittstelle (bzw. Funk-Schnittstelle) zur Durchführung einer drahtlose Kommunikation aufweist. Der Wireless Adapter ist insbesondere lösbar an das jeweilige Feldgerät anschließbar. Insbesondere sind durch den Wireless Adapter Daten bezüglich des Feldgerätes drahtlos übermittelbar. Dementsprechend kann durch einen Wireless Adapter ein herkömmliches Feldgerät zu einem Funk-Feldgerät aufgerüstet werden. Dabei ist nicht zwingend, dass durch den Wireless Adapter sämtliche Kommunikation für das Feldgerät drahtlos durchgeführt wird. Wie oberhalb erläutert wird, kann durch einen Wireless Adapter insbesondere die Anbindung eines Feldgerätes an einen drahtlosen Feldbus hergestellt werden. Alternativ kann die Kommunikation über den Feldbus (z.B. im Rahmen der Prozesssteuerung) aber auch drahtgebunden erfolgen. Ferner besteht in beiden Fällen die Möglichkeit, einen Wireless Adapter dazu einzusetzen, um Daten bezüglich des Feldgerätes drahtlos an eine entsprechende Kommunikationseinheit, die beispielsweise durch einen Host gebildet wird, zu übermitteln. Insbesondere kann der Wireless Adapter Daten bezüglich des Feldgerätes über die drahtgebundene Kommunikationsverbindung abfragen. Diese Daten kann er unmittelbar oder zeitlich verzögert, beispielsweise nachdem er über einen bestimmten Zeitraum Daten gesammelt hat, drahtlos an die übergeordnete Kommunikationseinheit übermitteln. In umgekehrter Weise können auch Daten bezüglich des Feldgerätes (zum Beispiel vorzunehmende Parametereinstellungen, etc.) von der übergeordneten Kommunikationseinheit drahtlos an den Wireless Adapter und von diesem wiederum drahtgebunden an das Feldgerät übermittelt werden.

Durch die "übergeordnete Kommunikationseinheit" ist eine drahtlose Kommunikation mit dem Wireless Adapter durchführbar. Daneben kann diese auch noch weitere Funktionen ausführen. Insbesondere kann sie, wie unterhalb erläutert wird, als Host ausgebildet sein, auf dem ein entsprechender Server implementiert wird. Ferner können auf dieser auch noch weitere Anwendungen bzw. Programme, wie beispielsweise ein Auswertetool, ein Konfigurationstool, etc. (tool: Werkzeug) implementiert sein. Indem die übergeordnete Kommunikationseinheit in drahtloser Kommunikationsverbindung mit dem Wireless Adapter steht, ist nicht zwingend vorgesehen, dass der gesamte Kommunikationspfad drahtlos verläuft. Vielmehr kann auch vorgesehen sein, dass ein Teil des Kommunikationspfades drahtgebunden verläuft und/oder dass entlang dem Kommunikationspfad zwischen dem Wireless Adapter und der übergeordneten Kommunikationseinheit eine oder mehrere, weitere Kommunikationseinheiten an der Kommunikation beteiligt sind.

In Feldbus-Systemen ist in der Regel vorgesehen, dass Statusänderungen eines Feldgerätes mitgeteilt werden. Die Mitteilung einer Statusänderung erfolgt in der Regel durch die Übermittlung von Basis-Statusinformationen (alternative Bezeichnungen: "Fehlerflag", "Fehlerbit", "Statusbit" oder "Statusbyte"), was beispielsweise zusammen mit der Übermittlung eines Messwertes (eines Sensors) oder zusammen mit der Bestätigung eines empfangenen Stellbefehls (im Falle eines Aktors) erfolgen kann. Beispielsweise können die Basis-Statusinformationen durch "GOOD" (deutsch: gut), "UNCERTAIN" (deutsch: unsicher) und "BAD" (deutsch: schlecht) gebildet werden. Weitergehende Informationen bezüglich des Status des Feldgerätes und/oder bezüglich eines, in dem Feldgerät aufgetretenen Fehlers, können aus der Mitteilung der Statusänderung des Feldgerätes (vgl. Schritt A)) nicht erhalten werden. Solche weitergehenden Informationen können durch die, in Schritt B) durchgeführte Abfrage von erweiterten Statusinformationen erhalten werden. Diese erweiterten Statusinformationen werden teilweise auch als Diagnoseinformationen oder Fehlerinformationen bezeichnet. Bei dem HARTⓇ-Feldbus-Protokoll können die erweiterten Statusinformationen durch ein Anfrage-Telegramm mit dem Kommando 48 (engl. Command 48) abgefragt werden. Zur Auswertung der erweiterten Statusinformationen wird gerätespezifisches Wissen, insbesondere Informationen zur Geräteintegration des jeweiligen Feldgerätes, benötigt.

Unter einem "ereignisgesteuerten" Abfragen und einem "ereignisgesteuerten" Übermitteln wird verstanden, dass dieses Abfragen bzw. Übermitteln durch ein entsprechendes Ereignis ausgelöst wird und direkt (d.h. mit keiner oder nur geringer zeitlicher Verzögerung) erfolgt. Bei Schritt B) ist dabei das auslösende Ereignis die Feststellung, dass eine Statusänderung des Feldgerätes mitgeteilt wurde. Bei Schritt C) wird der Schritt des Übermittelns wiederum möglichst unmittelbar nach Erhalt der erweiterten Statusinformationen durch den Wireless Adapter durchgeführt. Dementsprechend werden die Schritte des Abfragens (vgl. Schritt B)) und des Übermittelns (vgl. Schritt C)) losgelöst von einer planmäßigen oder zyklischen Kommunikation durchgeführt. Insbesondere kann die Übermittlung von dem Wireless Adapter an die übergeordnete Kommunikationseinheit in einem Event-Modus (deutsch: Ereignis-Modus) oder in einem Burst-Modus (deutsch: Berst-Modus) erfolgen.

Bei dem Auswertetool (deutsch: Auswerte-Werkzeug) handelt es sich um eine Anwendung (bzw. ein Programm), durch die erweiterte Statusinformationen des jeweiligen Feldgerätes auswertbar sind. Daneben kann so ein Auswertetool auch noch weitere Funktionen aufweisen. Insbesondere kann es als Diagnosetool (deutsch: Diagnose-Werkzeug), durch das eine Diagnose des zugehörigen Feldgerätes erstellbar und für einen Benutzer anzeigbar ist, durch ein Konfigurationstool (deutsch: Konfigurations-Werkzeug), durch das neben der Erstellung einer Diagnose auch Bedienfunktionalitäten in Bezug auf das zugehörige Feldgerät ausführbar sind, und/oder durch ein Asset-Management-System (deutsch: Anlagen-Management-System) gebildet werden. Weiterhin kann vorgesehen sein, dass das Auswertetool die betreffenden Funkionen nicht nur in Bezug auf ein zugehöriges Feldgerät sondern in Bezug auf mehrere Feldgeräte, insbesondere mehrere Feldgeräte unterschiedlichen Feldgerätetyps, ausführt. Zur Ausführung dieser Funkionen kann es insbesondere auf Informationen zur Geräteintegration des jeweiligen Feldgerätes zugreifen. Das Auswerttool kann dabei direkt auf der übergeordneten Kommunikationseinheit implementiert sein. Alternativ kann es auch auf einer separaten Kommunikationseinheit, die mit der übergeordneten Kommunikationseinheit in Kommunikationsverbindung steht oder vorübergehend bringbar ist, implementiert sein. Unter einem "Bereitstellen der erweiterten Statusinformationen" (vgl. Schritt C)) an das Auswertetool wird sowohl eine Übermittlung an das Auswertetool als auch ein Bereitstellen zum Abruf umfasst.

Indem das Status-Muster spezifisch für das betreffende Feldgerät angepasst ist, kann es insbesondere spezifisch für den jeweiligen Feldgerätetyp und/oder spezifisch für die jeweilige Instanz (d.h. für die jeweils eingestellte Betriebsart und/oder die jeweiligen Einsatzbedingungen des Feldgerätes) sein. Die Kommunikationseinheit, in welcher der Abgleich durchgeführt wird, kann insbesondere durch den Wireless Adapter, durch die übergeordnete Kommunikationseinheit oder auch durch eine weitere Kommunikationseinheit, die an der Kommunikation zwischen dem Wireless Adapter und der übergeordneten Kommunikationseinheit beteiligt ist, gebildet werden.

Gemäß einer Weiterbildung ist in dem Status-Muster für die verschiedenen, von dem zugehörigen Feldgerät bereitstellbaren, erweiterten Statusinformationen jeweils bestimmt, ob diese auszuwerten sind oder nicht. Bei der Erstellung des Status-Musters müssen lediglich die verschiedenen, durch das Feldgerät bereitstellbaren, erweiterten Statusinformationen berücksichtigt und mit der jeweils zugehörigen Information, ob diese auszuwerten sind oder nicht, verknüpft werden. Ein so ausgebildetes Status-Muster kann einfach erstellt werden.

Gemäß einer Weiterbildung sind die für ein Konfigurationstool erforderlichen Informationen zur Erstellung eines, zu dem Feldgerät zugehörigen Status-Musters in Informationen zur Geräteintegration des Feldgerätes, insbesondere in einer Gerätebeschreibung und/oder in einem Gerätetreiber des Feldgerätes, enthalten. Dementsprechend kann ein Benutzer das, zu einem Feldgerät zugehörige Status-Muster einfach durch ein Konfigurationstool erstellen lassen, ohne dass er hierzu über weitergehendes, gerätespezifisches Wissen verfügen muss. Die feldgerätetyp-spezifischen Besonderheiten werden durch das Konfigurationstool automatisch, indem es die Informationen zur Geräteintegration des betreffenden Feldgerätes verwendet, berücksichtigt. Ist zusätzlich gewünscht, dass das Status-Muster auch noch Instanz-spezifisch angepasst ist, so kann gegebenenfalls zusätzlich vorgesehen sein, dass der Benutzer über das Konfigurationstool bei der Erstellung des Status-Musters entsprechende Anpassungen vornimmt. Die Informationen zur Erstellung des Status-Musters bzw. entsprechende Funktionalitäten können in den Informationen zur Geräteintegration des Feldgerätes so weitgehend vorgesehen sein, dass das Konfigurationstool nicht speziell zur Erstellung eines entsprechenden Status-Musters ausgebildet sein muss oder gegebenenfalls nur geringfügige Anpassungen des Konfigurationstools erforderlich sind. Nach dem Erstellen kann das Status-Muster dann in die Kommunikationseinheit, in welcher der Abgleich durchgeführt wird, importiert und dort hinterlegt werden. Die betreffende Kommunikationseinheit greift dann zur Durchführung des Abgleichs auf das Status-Muster des zugehörigen Feldgerätes zu.

Als Konfigurationstool wird ein Programm (bzw. eine Anwendung) bezeichnet, das zum Bedienen sowie zur Konfiguration von Feldgeräten eingesetzt wird. Insbesondere sind durch solch ein Konfigurationstool Parameter des Feldgerätes auslesbar und schreibbar. Weiterhin wird durch ein Konfigurationstool eine geeignete Benutzeroberfläche bereitgestellt, über die ein Nutzer Parameter des Feldgerätes lesen und/oder schreiben kann. Ferner kann durch ein Konfigurationstool eine Diagnose des Feldgerätes erstellt werden. Hierzu kann es insbesondere die erweiterten Statusinformationen sowie gegebenenfalls zusätzliche, über spezielle Diagnose-Anfragen erhaltene Informationen auswerten. Daneben kann das Konfigurationstool noch weitere Funktionen ausführen. Ein Konfigurationstool ist beispielsweise FieldCareⓇ der Firma Endress + Hauser.

Indem die Informationen zur Erstellung eines, zu dem Feldgerät zugehörigen Status-Musters in Informationen zur Geräteintegration dieses Feldgerätes enthalten sind, benötigt das Konfigurationstool kein Feldgerätetyp-spezifisches Wissen, um das, zu dem jeweiligen Feldgerät zugehörige Status-Muster zu erstellen. Informationen zur Geräteinformation werden allgemein eingesetzt, um verschiedene Feldgeräte, insbesondere Feldgeräte von verschiedenen Herstellern, über ein- und dasselbe Konfigurationstool bedienen zu können. Durch die Informationen zur Geräteintegration eines Feldgerätes werden dem jeweiligen Konfigurationstool die für eine Bedienung erforderlichen Eigenschaften, Funktionen und Informationen des betreffenden Feldgerätes bekannt gemacht. Dabei wurden Standards in Bezug auf Informationen zur Geräteintegration entwickelt. Zum einen umfassen Informationen zur Geräteintegration eines Feldgerätes beispielsweise eine Gerätebeschreibung (DD) (engl.: "device description") des Feldgerätes. Die Gerätebeschreibung wird in der Regel in textbasierter Form erstellt (z.B. im ASCII-Textformat). Hierzu werden je nach verwendetem Feldbus-System verschiedene Gerätebeschreibungssprachen verwendet. Die in der Gerätebeschreibung bereitgestellten Informationen werden in der Regel durch einen Interpreter interpretiert bzw. übersetzt und an das Konfigurationstool, das eine Rahmenapplikation für die Gerätebeschreibung bildet, bereitgestellt. Ferner umfassen Informationen zur Geräteintegration eines Feldgerätes beispielsweise einen Gerätetreiber des Feldgerätes, insbesondere einen "Device Type Manager" (DTM) (deutsch: Gerätetyp-Manager). Ein Gerätetreiber, insbesondere ein "Device Type Manager", ist dabei eine gerätespezifische Software, die Daten und Funktionen des Feldgerätes kapselt und graphische Bedienelemente bereitstellt. Solch ein Gerätetreiber benötigt zur Ausführung eine entsprechende Rahmenapplikation. Beispielsweise benötigt ein "Device Type Manager" zur Ausführung eine "FDT-Rahmenapplikation" (FDT: Field Device Tool; deutsch: Feldgerätwerkzeug). Das Konfigurationstool "FieldCareⓇ" von Endress + Hauser bildet eine solche FDT-Rahmenapplikation.

Gemäß einer Weiterbildung werden die erweiterten Statusinformationen durch das Feldgerät in Form einer Statusinformationen-Bitmap (deutsch: Statusinformation-Bitfolge) bereitgestellt. Dabei wird durch die Belegung der Bitstellen der Statusinformationen-Bitmap der Inhalt der jeweils übermittelten, erweiterten Statusinformationen bestimmt. Ferner wird das Status-Muster durch eine entsprechende Muster-Bitmap (deutsch: Muster-Bitfolge) gebildet und bei dem Abgleich (vgl. Schritt C)) wird die Statusinformationen-Bitmap mit der Muster-Bitmap verglichen. Durch eine Bitmap gelingt eine besonders einfache Darstellung der jeweiligen, erweiterten Statusinformationen sowie des Status-Musters. Unter "Bitmap" wird insbesondere eine Datenstruktur verstanden, die aus einer Folge von einzelnen Bits gebildet wird (alternative Bezeichnung: Bit Array; deutsch: Bitfolge). Die einzelnen Bits der Bitmap können dabei auch in Wörter, insbesondere in Bytes, gruppiert sein. Beispielsweise kann eine Ausgestaltung derart sein, dass die Statusinformationen-Bitmap zur Darstellung der erweiterten Statusinformationen eine vorbestimmte Länge (Bitstellenanzahl) aufweist. Ferner kann vorgesehen sein, dass jeder, von dem Feldgerät bereitstellbaren, erweiterten Statusinformation eine zugehörige Belegung der Bitstellen der Statusinformationen-Bitmap zugeordnet ist. Die Muster-Bitmap ist insbesondere derart ausgebildet, dass sie die gleiche Länge (d.h. die gleiche Bitstellenanzahl) wie die Statusinformationen-Bitmap aufweist. Die Belegung der Bitstellen der Muster-Bitmap kann insbesondere derart gewählt werden, das nur solche erweiterten Statusinformationen auszuwerten sind, bei denen die in der zugehörigen Statusinformationen-Bitmap mit "1" belegten Bitstellen auch in der Muster-Bitmap mit "1" belegt sind. Ob eine jeweils erforderliche Übereinstimmung vorliegt, kann durch einen bitstellenweisen Vergleich der Statusinformationen-Bitmap mit der Muster-Bitmap festgestellt werden.

Gemäß einer Weiterbildung wird das Feldgerät durch den Wireless Adapter mit elektrischer Leistung versorgt. Auf diese Weise kann die aus dem Feldgerät und dem Wireless Adapter gebildete Einheit autark betrieben werden. Dies ist insbesondere bei ausgesetzten, schwer zugänglichen und/oder extremen Bedingungen ausgesetzten Einsatzorten vorteilhaft. Gemäß einer Weiterbildung weist der Wireless Adapter eine autarke Stromquelle, insbesondere eine Batterie, einen Akkumulator und/oder eine Solarzelle auf.

Gemäß einer Weiterbildung wird im Normalbetrieb zwischen dem Feldgerät und dem Wireless Adapter zu ersten, vorbestimmten Zeiten eine Kommunikation durchgeführt. Fernerwird zwischen dem Wireless Adapter und der übergeordneten Kommunikationseinheit zu zweiten, vorbestimmten Zeiten eine drahtlose Übermittlung von Daten bezüglich des Feldgerätes durchgeführt. Dabei ist der Wireless Adapter im Normalbetrieb zu Zeiten, in denen er keine Kommunikation durchführt, ausgeschaltet. Insbesondere ist vorgesehen, dass die Zeitintervalle zwischen den ersten vorbestimmten Zeiten kürzer, beispielsweise um ein ganzzahliges Vielfaches kürzer, als die Zeitintervalle zwischen den zweiten, vorbestimmten Zeiten sind. Diese Weiterbildung betrifft insbesondere einen Einsatz, in dem der Wireless Adapter Daten bezüglich des Feldgerätes sammelt und anschließend gesammelt an die übergeordnete Kommunikationseinheit übermittelt. Indem der Wireless Adapter zu Zeiten, in denen er keine Kommunikation durchführt, ausgeschaltet ist, wird ein unnötiger Energieverbrauch vermieden. Auch ist vorzugsweise vorgesehen, dass das Feldgerät jeweils zur Durchführung einer Kommunikation durch den Wireless Adapter mit Spannung versorgt wird und angeschaltet wird und nach dem Abschluss der Kommunikation wieder ausgeschalten und von der Spannungsversorgung getrennt wird. Indem gemäß der vorliegenden Erfindung die Schritte des Abfragens (vgl. Schritt B)) und des Übermittelns sowie Bereitstellens (vgl. Schritt C)) ereignisgesteuert durchgeführt werden, ist der Wireless Adapter bei Auftreten eines entsprechenden Ereignisses auch außerhalb dieser planmäßigen Zeiträume eingeschaltet, was eine zeitnahe Analyse und gegebenenfalls eine schnelle Fehlerbehebung ermöglicht.

Gemäß einer Weiterbildung bleibt der Wireless Adapter nach dem Schritt des Übermittelns der erweiterten Statusinformationen (vgl. Schritt C)) für eine vorbestimmte Zeitdauer zumindest so weitgehend aktiviert, dass durch die übergeordnete Kommunikationseinheit eine Kommunikation mit demselben initiierbar ist. Durch diese Weiterbildung wird die Möglichkeit bereitgestellt, dass von der übergeordneten Kommunikationseinheit nach Erhalt der erweiterten Statusinformationen auf den Wireless Adapter und von diesem aus auf das Feldgerät zugegriffen werden kann. Solch ein Zugriff kann beispielsweise erfolgen, um noch weitergehende Statusinformationen, die beispielsweise durch eine spezielle Diagnose-Anfrage (beispielsweise eines Diagnosetools oder eines Konfigurationstools) angefordert werden können, und/oder eine Einstellung von Parametern des Feldgerätes vornehmen zu können. Gemäß einer Weiterbildung ist vorgesehen, dass der Wireless Adapter während der vorbestimmten Zeitdauer in einem Energiesparmodus betrieben wird. Dies kann insbesondere ein Stand-by-Modus mit niedrigem Energieverbrauch oder gegebenenfalls ein Modus, in dem die drahtlose Kommunikations-Schnittstelle nur getaktet betrieben wird, sein. Weiterhin ist gemäß einer Weiterbildung vorgesehen, dass in dem Wireless Adapter Service-Zeiten, zu denen Personal für die Durchführung einer Analyse bzw. Diagnose und/oder einer Fehlerbehebung erreichbar ist, hinterlegt sind. Dabei kann vorgesehen sein, dass der Wireless Adapter außerhalb der Service-Zeiten direkt nach der Übermittlung der erweiterten Statusinformationen (vgl. Schritt C)) abschaltet, während er innerhalb der Service-Zeiten für die vorbestimmte Zeitdauer aktiviert beleibt. Erfolgt die Übermittlung der erweiterten Statusinformationen außerhalb der Service-Zeiten, so kann gegebenenfalls vorgesehen sein, dass der Wireless Adapter innerhalb der Service-Zeiten erneut eine entsprechende Meldung an die übergeordnete Kommunikationseinheit übermittelt.

Gemäß einer Weiterbildung wird nachfolgender Schritt insbesondere nach dem Schritt des Übermittelns der erweiterten Statusinformation (vgl. Schritt C)) durchgeführt: Bereitstellen eines transparenten Kommunikationskanals von der übergeordneten Kommunikationseinheit über den Wireless Adapter zu dem Feldgerät, so dass über den transparenten Kommunikationskanal eine Kommunikation direkt mit dem Feldgerät durchführbar ist. Auf diese Weise kann eine, auf die übergeordnete Kommunikationseinheit zugreifende Anwendung (z.B. ein Konfigurationstool, ein Diagnosetool, ein Asset-Management-System, etc.) direkt mit dem Feldgerät kommunizieren. Insbesondere ist nicht erforderlich, dass jeweils eine separate Kommunikation zwischen der übergeordneten Kommunikationseinheit und dem Wireless Adapter sowie zwischen dem Wireless Adapter und dem Feldgerät gemäß dem jeweiligen Kommunikationsprotokoll und zu den jeweils zulässigen Zeiten erfolgt. Insbesondere kann vorgesehen sein, das die Kommunikation über den transparenten Kommunikationskanal gemäß einem Feldbus-Protokoll (HART®, Profibus®, Foundation® Fieldbus, herstellerspezifisches Feldbus-Protokoll) erfolgt, gemäß welchem durch das betreffende Feldgerät eine Kommunikation durchführbar ist. Beispielsweise kann ein Konfigurationstool über den transparenten Kommunikationskanal gemäß dem jeweiligen Feldbus-Protokoll für die jeweilige Analyse bzw. Diagnose erforderliche, spezielle Statusinformationen des Feldgerätes abfragen und/oder Parametereinstellungen an dem Feldgerät im Rahmen einer Fehlerbehebung vornehmen.

Gemäß einer Weiterbildung wird durch die übergeordnete Kommunikationseinheit nach Erhalt der erweiterten Statusinformationen nachfolgender Schritt durchgeführt: Übermitteln einer Meldung an das Auswertetool, durch das erweiterte Statusinformationen des Feldgerätes auswertbar sind. Durch solch eine Meldung (z.B. Alarmmeldung) kann das Auswertetool darüber informiert werden, dass erweiterte Statusinformationen des Feldgerätes (beispielsweise zum Abruf) bereitstehen.

Gemäß einer Weiterbildung ist das Auswertetool derart ausgebildet, dass durch dieses unter Verwendung von Informationen zur Geräteintegration des Feldgerätes, insbesondere von einer Gerätebeschreibung und/oder einem Gerätetreiber des Feldgerätes, erweiterte Statusinformationen des Feldgerätes auswertbar sind. Durch die Verwendung von Informationen zur Geräteintegration des Feldgerätes braucht das Auswertetool selbst über kein gerätespezifisches Wissen des jeweiligen Feldgerätes zu verfügen. Insbesondere kann vorgesehen sein, dass das Auswertetool auf Informationen zur Geräteintegration von einer Mehrzahl von Feldgeräten zugreifen kann. Auf diese Weise kann das Auswertetool die Auswerte-Funktionalität (und gegebenenfalls noch weitere Funktionalitäten) in Bezug auf mehrere Feldgeräte ausüben.

Gemäß einer Weiterbildung wird der Abgleich in dem Wireless Adapter durchgeführt. Insbesondere ist das Status-Muster in dem Wireless Adapter hinterlegt. Gemäß dieser Weiterbildung wird, da eine erste Auswertung der erweiterten Statusinformationen in Form des Abgleichs bereits an einer sehr frühen Stelle des Kommunikationspfades von dem Feldgerät bis zu der übergeordneten Kommunikationseinheit (und gegebenenfalls einem darauf zugreifenden Auswertetool) stattfindet, eine überflüssige Kommunikation vermieden. Dies ist auch im Hinblick auf einen möglichst niedrigen Energieverbrauch der, an der Kommunikation beteiligten Kommunikationseinheiten vorteilhaft. Ferner wird die übergeordnete Kommunikationseinheit nicht unnötig in Anspruch genommen, da ein ereignisgesteuertes Übermitteln der erweiterten Statusinformationen von dem Wireless Adapter an die übergeordnete Kommunikationseinheit (vgl. Schritt C)) insbesondere nur dann durchgeführt wird, falls der Abgleich in dem Wireless Adapter ergibt, dass die betreffenden, erweiterten Statusinformationen auszuwerten sind.

Gemäß einer Weiterbildung wird der Abgleich in der übergeordneten Kommunikationseinheit durchgeführt. Bei dieser Weiterbildung ist insbesondere vorgesehen, dass der Wireless Adapter nach dem Schritt des Abfragens (vgl. Schritt B)) immer auch den Schritt des ereignisgesteuerten Übermittelns (vgl. Schritt C)) durchführt. Die übergeordnete Kommunikationseinheit stellt die erweiterten Statusinformationen jedoch nur dann an das Auswertetool bereit, wenn der, in der übergeordneten Kommunikationseinheit durchgeführte Abgleich ergibt, dass die betreffenden, erweiterten Statusinformationen auszuwerten sind.

Gemäß einer Weiterbildung verläuft die drahtlose Kommunikationsverbindung zwischen Wireless Adapter und der übergeordneten Kommunikationseinheit zumindest teilweise über ein drahtloses Fernübertragungsnetz. Solch ein drahtloses Fernübertragungsnetz kann insbesondere weltweit eine drahtlose Kommunikation zwischen der übergeordneten Kommunikationseinheit und dem jeweiligen Wireless Adapter ermöglichen. Auf diese Weise kann die übergeordnete Kommunikationseinheit in Bezug auf Wireless Adapter, die weltweit verteilt sind, entsprechende Dienste ausführen. Das drahtlose Fernübertragungsnetz kann insbesondere durch ein GSM-Netz (GSM: Global System for Mobile Communications; deutsch: Globales System für mobile Kommunikation), durch ein UMTS-Netz (UMTS: Universal Mobile Telecommunications System; deutsch: Universelles, mobiles Telekommunikations-System), etc., gebildet werden. Führt die übergeordnete Kommunikationseinheit jedoch nur Dienste in Bezug auf Wireless Adapter aus, die in lokaler Umgebung der übergeordneten Kommunikationseinheit angeordnet sind, so kann die drahtlose Kommunikation alternativ auch nur über ein lokales, drahtloses Kommunikationsnetz erfolgen. Insbesondere kann das drahtlose Kommunikationsnetz gemäß dem WirelessHARTⓇ-Standard oder gemäß dem ISA100-Standard ausgebildet sein, die jeweils auf dem Standard IEEE 802.15.4 aufbauen.

Gemäß einer Weiterbildung ist auf der übergeordneten Kommunikationseinheit ein Server implementiert, durch den Daten bezüglich einer Mehrzahl von Feldgeräten, insbesondere einer Mehrzahl von Feldgeräten unterschiedlicher Nutzer, verwaltbar und an entsprechende Anwendungen (bzw. Programme) bereitstellbar sind. Insbesondere können diese Daten an die jeweiligen Anwendungen übermittelt werden und/oder für solche Anwendungen abrufbar sein. Die jeweiligen, auf die übergeordnete Kommunikationseinheit zugreifenden Anwendungen, wie beispielsweise ein Auswertetool, ein Diagnosetool, ein Konfigurationstool und/oder ein Asset-Management-System, können dabei direkt auf der übergeordneten Kommunikationseinheit implementiert sein. Alternativ können sie aber auch auf einer separaten Kommunikationseinheit implementiert sein und mit der übergeordneten Kommunikationseinheit (zumindest zeitweise) in Kömmunikationsverbindung (z.B. über das Internet, etc.) stehen. Durch die übergeordnete Kommunikationseinheit kann insbesondere ein geschützter Zugang (zum Beispiel durch ein Passwort geschützt) für die jeweilige Anwendung bereitgestellt werden. Ferner können durch den Server der übergeordneten Kommunikationseinheit nur spezifisch für die jeweilige Anwendung und/oder spezifisch für den jeweiligen Nutzer ausgewählte Daten bereitgestellt werden. Die Verwaltung von Daten kann insbesondere eine Speicherung, Archivierung, Überwachung, Bearbeitung und/oder Bereitstellung dieser (ggf. weiterverarbeiteten) Daten umfassen. Daneben kann der Server auch noch weitere Funktionen und/oder Dienste ausführen. Solche weiteren Funktionen können beispielsweise eine Benachrichtigung der jeweiligen Anwendung bei Vorliegen bestimmter Voraussetzungen umfassen.

Die vorliegende Erfindung betrifft ferner einen Wireless Adapter, an den (genau) ein Feldgerät anschließbar und mit diesem in drahtgebundene Kommunikationsverbindung bringbar ist. Dabei ist durch den Wireless Adapter eine drahtlose Kommunikation durchführbar. Eine Elektronik des Wireless Adapters ist derart ausgebildet, dass im Einsatz überwachbar ist, ob im Rahmen der Kommunikation mit dem angeschlossenen Feldgerät eine Statusänderung des Feldgerätes mitgeteilt wird, dass, falls eine Statusänderung mitgeteilt wird, ereignisgesteuert erweiterte Statusinformationen von dem angeschlossenen Feldgerät abfragbar sind, dass ein Abgleich der erweiterten Statusinformationen mit einem, spezifisch für das angeschlossene Feldgerät angepassten und in dem Wireless Adapter hinterlegbaren Status-Muster durchführbar ist und daraus bestimmbar ist, ob die betreffenden, erweiterten Statusinformationen auszuwerten sind, und dass die erweiterten Statusinformationen nur dann von dem Wireless Adapter drahtlos an eine, mit dem Wireless Adapter in Kommunikationsverbindung stehende Kommunikationseinheit übermittelt werden, wenn der durchgeführte Abgleich ergibt, das die erweiterten Statusinformationen auszuwerten sind. Durch den erfindungsgemäßen Wireless Adapter werden im Wesentlichen die gleichen Vorteile erzielt, die oberhalb im Bezug auf das erfindungsgemäße Verfahren erläutert wurden. Ferner sind bei dem Wireless Adapter die oberhalb, im Bezug auf das erfindungsgemäße Verfahren erläuterten Weiterbildungen in entsprechender Weise realisierbar. Insbesondere kann bei Verfahrensschritten, sofern diese im Bereich des Wireless Adapters ausführbar sind, die Elektronik des Wireless Adapters zur Ausführung des jeweiligen Schrittes entsprechend angepasst sein. Die "Elektronik" des Wireless Adapters kann durch Hardware und/oder Software gebildet werden. Ferner kann sie analog und/oder digital arbeiten.

Weitere Vorteile und Zweckmäßigkeiten der Erfindung ergeben sich anhand der nachfolgenden Beschreibung von Ausführungsbeispielen unter Bezugnahme auf die beigefügten Figuren.
Von den Figuren zeigen:
- Fig. 1:: ein System aufweisend mehrere Feldgerät-Wireless-Adapter-Einheiten, eine übergeordnete Kommunikationseinheit, und mehrere, auf die übergeordnete Kommunikationseinheit zugreifende Tools; und
- Fig. 2:: ein Flussdiagramm zur Veranschaulichung einer Ausführungsform des erfindungsgemäßen Verfahrens.

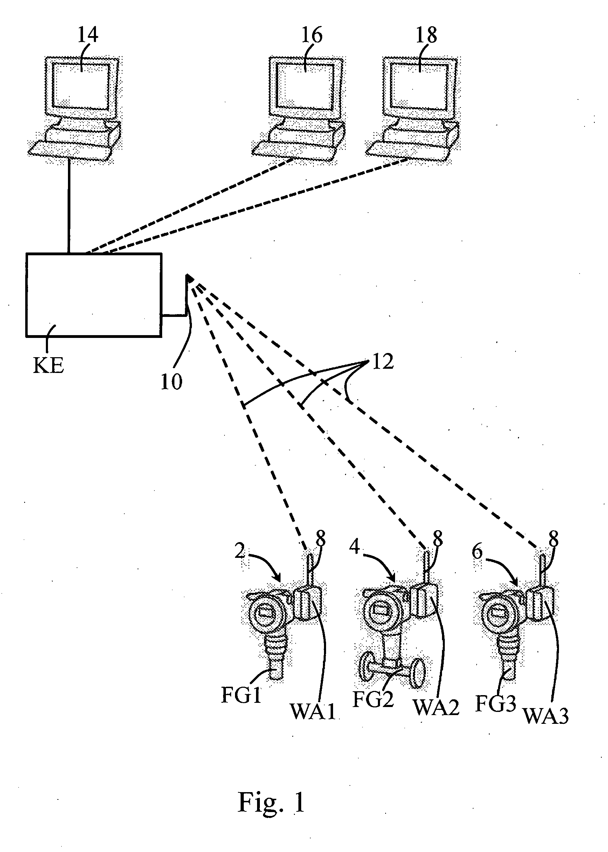

In Fig. 1 ist ein System dargestellt, bei dem drei Feldgeräte FG1, FG2 und FG3 jeweils an zugehörigen Wireless Adaptern WA1, WA2 und WA 3 angeschlossen sind. Die Feldgeräte FG 1, FG 2 und FG 3 bilden jeweils mit den daran angeschlossenen Wireless Adaptern WA1, WA2 und WA3 entsprechende Feldgerät-Wireless-Adapter-Einheiten 2, 4, 6. Jeder der Wireless Adapter WA1, WA2 und WA 3 weist eine Funkeinheit 8 auf. Die Wireless Adapter WA1, WA2 und WA3 stehen über ein GSM-Fernübertragungsnetz mit einer übergeordneten Kommunikationseinheit KE in Kommunikationsverbindung (vgl. gestrichelte Linien 12 in Fig. 1). In Fig. 1 ist die übergeordnete Kommunikationseinheit KE ebenfalls mit einer entsprechenden Funkeinheit 10 dargestellt. Bei Femübertragungsnetzen ist abweichend von der schematischen Darstellung in Fig. 1 oftmals vorgesehen, dass die übergeordnete Kommunikationseinheit KE über ein (beliebiges) Telekommunikatiönsnetz mit dem Fernübertragungsnetz (hier: GSM-Femübertragungsnetz) verbunden ist.

Die Feldgerät-Wireless-Adapter-Einheiten 2, 4, 6 können dabei weltweit verteilt sein. Daneben können auch noch weitere Feldgerät-Wireless-Adapter-Einheiten oder Funk-Feldgeräte mit der übergeordneten Kommunikationseinheit KE in Kommunikationsverbindung stehen und die übergeordnete Kommunikationseinheit KE kann in Bezug auf diese entsprechende Dienste bzw. Funktionen ausführen. Bei den Feldgeräten kann es sich um Feldgeräte unterschiedlicher Nutzer handeln.

Auf der übergeordneten Kommunikationseinheit KE ist ein Server implementiert, durch den im Einsatz Daten bezüglich der zugehörigen Feldgeräte FG1, FG2 und FG 3 verwaltbar und an entsprechende Anwendungen bereitstellbar sind. Die übergeordnete Kommunikationseinheit KE und die darüber bereitgestellten Dienste können von einem unabhängigen Dienstleister, der insbesondere von den Nutzern der einzelnen Feldgeräte FG1, FG2 und FG3 unabhängig ist, bereitgestellt werden. Auf die Daten, die durch den Server auf der übergeordneten Kommunikationseinheit KE bereitgestellt werden, können unterschiedliche Anwendungen, die nachfolgend als Tools (deutsch: Werkzeuge) bezeichnet werden, zugreifen. Diese Tools sind bei der dargestellten Ausführungsform jeweils auf separat von der übergeordneten Kommunikationseinheit KE ausgebildeten Kommunikationseinheiten 14, 16 und 18 implementiert. Dabei kann es sich um Tools unterschiedlicher Nutzer handeln. Insbesondere kann ein Tool eines bestimmten Nutzers über einen Passwort-geschützten Zugang nur auf Daten bezüglich der Feldgeräte, die von demselben Nutzer sind, zugreifen. Weiterhin kann vorgesehen sein, dass auf die übergeordnete Kommunikationseinheit KE weitere, auf entsprechenden Hosts implementierte Server (sogenannte Hosting Server) zugreifen, die dann wiederum entsprechende Dienste in Bezug auf weitere Endnutzer (z.B. entsprechende Tools) bereitstellen. Die Feldgeräte FG1, FG2 und FG3 können zusätzlich zu dem drahtlosen Anschluss an das GSM-Fernübertragungsnetz auch an einem lokalen Feldbus-Netzwerk angeschlossen sein. Dieser Anschluss an das lokale Feldbus-Netzwerk kann drahtgebunden oder alternativ drahtlos, insbesondere über den jeweils an dem Feldgerät angeschlossenen Wireless Adapter, erfolgen.

Nachfolgend wird eine Ausführungsform des erfindungsgemäßen Verfahrens und des erfindungsgemäßen Wireless Adapters erläutert. Diese Erläuterung erfolgt unter Bezugnahme auf die Feldgerät-Wireless-Adapter-Einheit 2. Die Kommunikationseinheit 14 mit dem Konfigurationstool wird bei der vorliegenden Ausführungsform von demselben Nutzer betrieben, in dessen Anlage auch die Feldgerät-Wireless-Adapter-Einheit 2 betrieben wird. Alternativ kann vorgesehen sein, dass die Kommunikationseinheit von einem Service-Dienstleister betrieben wird, der von dem jeweiligen Nutzer (der Feldgerät-Wireless-Adapter-Einheit 2) beauftragt ist, den zuverlässigen Betrieb dieser Feldgerät-Wireless-Adapter-Einheit 2 zu überwachen.

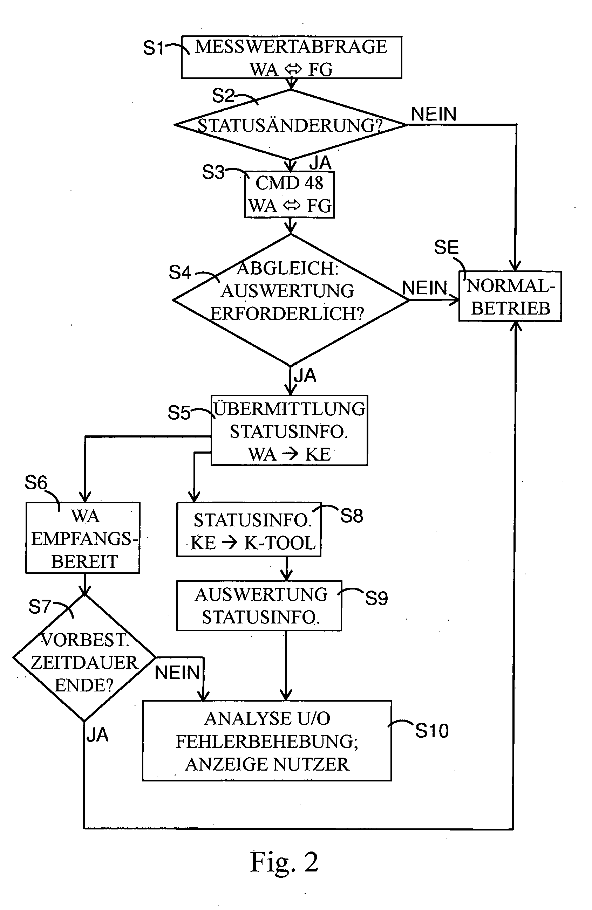

Das Feldgerät FG1 bildet ein Messgerät, durch das ein Messwert erfassbar ist. Beispielsweise kann durch das Feldgerät FG1 ein Füllstand in einem (nicht dargestellten) Behälter erfasst werden. Im Normalbetrieb wird durch den Wireless Adapter WA1 zu ersten, vorbestimmten Zeiten, wie beispielsweise alle 2 Stunden, ein Messwert von dem Feldgerät abgefragt (vgl. "MESSWERTABFRAGE WA⇔FG" bei S1 in Fig. 2). Diese Messwerte werden im Normalbetrieb in dem Wireless Adapter WA1 gesammelt und zu zweiten, vorbestimmten Zeiten, wie beispielsweise einmal am Tag, drahtlos an die übergeordnete Kommunikationseinheit KE übermittelt. Das Feldgerät FG1 wird durch den Wireless Adapter WA1 mit elektrischer Leistung versorgt. Im Normalbetrieb ist der Wireless Adapter WA1 zu Zeiten; in denen er keine Kommunikation durchführt, ausgeschaltet. Die (drahtgebundene) Kommunikation zwischen dem Feldgerät FG1 und dem Wireless Adapter WA1 erfolgt bei der vorliegenden Ausführungsform gemäß dem HART®-Protokoll.
Der Wireless Adapter WA1 überwacht im Rahmen der Kommunikation mit dem Feldgerät FG1, ob eine Statusänderung des Feldgerätes FG1 mitgeteilt wird (vgl. "STATUSÄNDERUNG?" bei Schritt S2 in Fig. 2). Beispielsweise kann sich der Status des Feldgerätes FG1 auf "BAD" (deutsch: schlecht) ändern. Während im Normalbetrieb der Wireless Adapter WA1 und das Feldgerät FG1 nach Übermittlung des Messwertes an den Wireless Adapter ausgeschaltet werden, werden dann, wenn eine Statusänderung des Feldgerätes FG1 mitgeteilt wird (vgl. "JA" bei Schritt S2 in Fig. 2), durch den Wireless Adapter WA1 erweiterte Statusinformationen von dem Feldgerät FG1 abgefragt. Diese Abfrage erfolgt bei der vorliegenden Ausführungsform unmittelbar nach Feststellung der Statusänderung. Zur Abfrage der erweiterten Statusinformationen übermittelt der Wireless Adapter WA1 ein, in dem HART®-Protokoll (vgl. "HARTⓇ Field Communication Protocol Specifications, Revision 7.0"; erhältlich über die HARTⓇ Communication Foundation) definiertes Anfrage-Telegramm mit dem Kommando 48. In Antwort darauf übermittelt das Feldgerät FG1 die erweiterten Statusinformationen (vgl. "CMD 48 WA⇔FG" bei Schritt S3 in Fig.2). Wird bei dem Schritt des Überwachens keine Statusänderung des Feldgerätes festgestellt (vgl. "NEIN" bei Schritt S2 in Fig. 2), werden der Wireless-Adapter WA1 und das Feldgerät FG1 weiter im Normalbetrieb betrieben (vgl. "NORMALBETRIEB" bei Schritt SE in Fig. 2).

Nach Erhalt der erweiterten Statusinformationen wird in dem Wireless Adapter WA1 ein Abgleich dieser erweiterten Statusinformationen mit einem, spezifisch für das Feldgerät FG1 angepassten Status-Muster durchgeführt. Wie oberhalb erläutert wird, werden die erweiterten Statusinformationen in Form einer Statusinformationen-Bitmap bereitgestellt. Die Statusinformationen-Bitmap ist dabei derart ausgestaltet, dass den verschiedenen Statusinformationen (bzw. Fehlertneldungen) jeweils eine zugehörige Bitstelle in der Statusinformationen-Bitmap zugeordnet ist. Die Belegung einer Bitstelle mit "1" in der Statusinformationen-Bitmap bedeutet dabei, dass die zugehörige Statusinformation (bzw. Fehlermeldung) in dem Feldgerät FG1 vorliegt. Hingegen bedeutet die Belegung einer Bitstelle mit "0", dass die zugehörige Statusinformation (bzw. Fehlermeldung) in dem Feldgerät FG1 nicht vorliegt. Das Status-Muster wird durch eine entsprechende Muster-Bitmap, welche die gleiche Länge (die gleiche Bitstellenanzahl) wie die Statusinformationen-Bitmap aufweist, gebildet. Die Muster-Bitmap ist bei der vorliegenden Ausführungsform derart ausgebildet, dass den verschiedenen Statusinformationen (bzw. Fehlermeldungen) jeweils die gleiche Bitstelle wie bei der Statusinformationen-Bitmap zugeordnet ist. Die Muster-Bitmap ist ferner derart ausgebildet, dass eine Bitstelle derselben nur dann mit "1" belegt ist, wenn die zugehörige Statusinformation (bzw. Fehlermeldung) auszuwerten ist, während sie mit "0" belegt ist, wenn die zugehörige Statusinformation (bzw. Fehlermeldung) nicht auszuwerten ist. Dementsprechend ist eine, in der Statusinformationen-Bitmap (durch Belegung der entsprechenden Bitstelle mit "1 ") gemeldete Statusinförmation nur dann auszuwerten, wenn die entsprechende Bitstelle auch in der Muster-Bitmap mit "1" belegt ist. Ist keine, der in der Statusinformationen-Bitmap mit "1" belegten Bitstelle(n) in der Muster-Bitmap mit "1" belegt, so sind die gesamten, erweiterten Statusinformationen nicht auszuwerten. Ist nur ein Teil der in der Statusinformationen-Bitmap mit "1" belegten Bitstellen in der Muster-Bitmap mit "1" belegt, so ist nur dieser Teil auszuwerten.

Wie oberhalb erläutert wird, kann die für das Feldgerät FG1 spezifische Muster-Bitmap im Voraus mit Hilfe eines Konfigurationstools, das zur Erstellung der Muster-Bitmap auf Informationen zur Geräteintegration des Feldgerätes FG1, insbesondere auf einen DTM (engl.: Device Type Manager; deutsch: Gerätetyp-Manager) zugreift, erstellt werden. Die Erstellung der Muster-Bitmap kann beispielsweise im Voraus durch das, auf der Kommunikationseinheit 14 implementierte Konfigurationstool durchgeführt werden. Nach der Erstellung kann die Muster-Bitmap in den Wireless Adapter WA1 importiert und darin hinterlegt werden.

In dem Wireless Adapter WA1 wird der. Abgleich durchgeführt, indem die einzelnen Bitstellen der Statusinformationen-Bitmap mit den entsprechenden Bitstellen der Muster-Bitmap verglichen werden (vgl. "ABGLEICH: AUSWERTUNG ERFORDERLICH?" in S4 in Fig. 2). Ergibt der Abgleich, dass die erhaltenen, erweiterten Statusinformationen nicht auszuwerten sind (vgl. "NEIN" bei Schritt S4 in Fig. 2), so wird die Feldgerät-Wireless-Adapter-Einheit 2 wieder im Normalbetrieb betrieben. Ergibt der Abgleich, dass die erhaltenen, erweiterten Statusinformationen auszuwerten sind (vgl. "JA" bei Schritt S4 in Fig.2), so wird die Statusinformationen-Bitmap unmittelbar (nach Durchführung des Abgleichs) an die übergeordnete Kommunikationseinheit KE übermittelt (vgl. "ÜBERMITTLUNG STATUSINFO WA=>KE" bei Schritt S5 in Fig. 2). Die Übermittlung der Statusinformationen-Bitmap erfolgt dabei in einem Event-Modus (deutsch: Ereignis-Modus). Die Übermittlung erfolgt dabei losgelöst von einer planmäßigen Kommunikation (die zum Beispiel zu vorbestimmten Zeiten erfolgt) und wird vorliegend durch das Ereignis, dass die erhaltenen, erweiterten Statusinformationen auszuwerten sind, ausgelöst.

Abweichend von dem Normalbetrieb bleibt der Wireless-Adapter WA1 auch nach Übermittlung der erweiterten Statusinformationen für eine vorbestimmte Zeitdauer in einem Stand-by-Modus aktiviert (vgl. "WA EMPFANGSBEREIT" bei Schritt S6 in Fig. 2). In dem Stand-by-Modus ist durch die übergeordnete Kommunikationseinheit KE eine Kommunikation mit dem Wireless Adapter initiierbar. Wird solch eine Kommunikation initiiert, so wird der Wireless Adapter WA1 "aufgeweckt" und kann eine Kommunikation mit der übergeordneten Kommunikationseinheit KE und/oder mit dem angeschlossenen Feldgerät FG1 abwickeln. Dementsprechend kann während der vorbestimmten Zeitdauer eine Analyse und/oder Fehlerbehebung an dem Feldgerät FG1 durchgeführt werden, wobei die Kommunikation jeweils über den Wireless Adapter WA1 (sowie die übergeordnete Kommunikationseinheit KE) erfolgt (vgl. "NEIN" bei Schritt S7 "VORBEST ZEITDAUER ENDE?" in Fig. 2). Nach Ablauf der vorbestimmten Zeitdauer (vgl. "JA" bei Schritt S7 in Fig. 2) wird die Feldgerät-Wireless-Adapter-Einheit 2 wieder im Normalbetrieb betrieben.

Parallel dazu, dass der Wireless Adapter WA1 über die vorbestimmte Zeitdauer hinweg empfangsbereit bleibt, wird in der übergeordneten Kommunikationseinheit KE die Statusinformationen-Bitmap an das, auf der Kommunikationseinheit 14 implementierte Konfigurationstool zum Abruf bereitgestellt (vgl. "STATUSINFO. KE=>K-TOOL" bei Schritt S8 in Fig. 2). Ferner wird durch die übergeordnete Kommunikationseinheit KE eine Nachricht an das Konfigurationstool und/oder an einen Nutzer, der für die Analyse und/oder Fehlerbehebung zuständig ist, übermittelt. Die Übermittlung der Nachricht kann beispielsweise per Email, per SMS, per Telegramm über ein drahtgebundenes Netzwerk, etc., erfolgen. Das Konfigurationstool stellt zumindest für den Abruf der Statusinformationen-Bitmap eine Kommunikationsverbindung zu der übergeordneten Kommunikationseinheit KE her und liest die Statusinformationen-Bitmap aus. Das Konfigurationstool hat ferner einen Zugriff auf Informationen zur Geräteintegration (insbesondere einen DTM) des Feldgerätes FG1, so dass es eine Auswertung der Statusinformationen-Bitmap mit Hilfe dieses gerätespezifischen Wissens durchführen kann (vgl. AUSWERTUNG STATUSINFO." bei Schritt S9 in Fig. 2).

Von dem Konfigurationstool aus wird nun als nächstes eine weitergehende Analyse und/oder Fehlerbehebung durchgeführt (vgl. "ANALYSE U/O FEHLERBEHEBUNG" bei Schritt S10 in Fig. 2). Dies kann insbesondere unter Mitwirkung und/oder unter Leitung eines zuständigen Nutzers erfolgen. Dabei kann das Konfigurationstool insbesondere spezielle Statusinformationen des Feldgerätes FG1 abfragen und/oder Parametereinstellungen an dem Feldgerät FG1 vornehmen. Zur Abwicklung der hierfür erforderlichen Kommunikation wird bei der vorliegenden Ausführungsform ein transparenter Kommunikationskanal von der übergeordneten Kommunikationseinheit KE über den Wireless Adapter WA1 zu dem Feldgerät FG1 bereitgestellt. Auf diese Weise kann das Konfigurationstool über den transparenten Kommunikationskanal direkt mit dem Feldgerät FG1 gemäß dem jeweiligen Feldbus-Protokoll (hier: HART®-Protokoll) kommunizieren. Eine solche Kommunikation ist zumindest während der vorbestimmten Zeitdauer, während welcher der Wireless Adapter WA1 entsprechend aktiviert bleibt, möglich. Auf einer Anzeige der Kommunikationseinheit 14, auf der das Konfigurationstool implementiert ist, werden einem Nutzer entsprechende Informationen angezeigt (vgl. "ANZEIGE NUTZER" bei Schritt S10 in Fig. 2). Insbesondere werden einem Nutzer Informationen bezüglich eines, in dem Feldgerät FG1 aufgetretenen Fehlers und/oder Vorschläge für nächste, vorzunehmende Handlungen, etc., angezeigt.

Die vorliegende Erfindung ist nicht auf die, unter Bezugnahme auf die Figuren erläuterte Ausführungsform beschränkt. Beispielsweise kann alternativ vorgesehen sein, dass die Muster-Bitmap in der übergeordneten Kommunikationseinheit hinterlegt ist und der Abgleich in der übergeordneten Kommunikationseinheit durchgeführt wird. In diesem Fall werden die erweiterten Statusinformationen von dem Wireless Adapter immer an die übergeordnete Kommunikationseinheit übermittelt. Der Wireless Adapter bleibt nach der Übermittlung vorzugsweise so weitgehend aktiviert, dass von der übergeordneten Kommunikationseinheit aus eine Kommunikation mit demselben initiierbar ist und er über den weiteren Verlauf des Vorgehens informiert werden kann. Der Abgleich wird in der übergeordneten Kommunikationseinheit durchgeführt. Ergibt der Abgleich, das die erweiterten Statusinformationen auszuwerten sind, so können die weiteren Schritte entsprechend wie bei der erläuterten Ausführungsform (nach Übermittlung der erweiterten Statusinformationen an die übergeordnete Kommunikationseinheit KE) ausgeführt werden. Ergibt der Abgleich, das die erweiterten Statusinformationen nicht auszuwerten sind, so wird der Wireless Adapter durch die übergeordnete Kommunikationseinheit benachrichtigt, dass er wieder in den Normalbetrieb wechseln und sich gegebenenfalls abschalten kann.

Bei der erläuterten Ausführungsform wird das Feldgerät durch einen Sensor gebildet. Alternativ kann es auch durch einen Aktor gebildet werden. Ein Anwendungsfall wäre beispielsweise, dass der, an dem Aktor angeschlossene Wireless Adapter im Normalbetrieb zu ersten, vorbestimmten Zeiten, von dem Aktor Basis-Statusinformationen abfragt und zu zweiten, vorbestimmten Zeiten eine drahtlose Übermittlung der gesammelten Daten an die übergeordnete Kommunikationseinheit durchführt. Wird dabei eine Statusänderung des Aktors festgestellt, so können die weiteren Schritte entsprechend ausgeführt werden.

## Patentansprüche

1. Verfahren zum Betreiben eines Systems aufweisend ein Feldgerät (FG1; FG2; FG3), einen, an dem Feldgerät (FG1; FG2; FG3) angeschlossenen Wireless Adapter (WA1; WA2; WA3), der mit dem Feldgerät (FG1; FG2; FG3) in drahtgebundener Kommunikationsverbindung steht, und eine übergeordnete Kommunikationseinheit (KE), die mit dem Wireless Adapter (WA1; WA2; WA3) in drahtloser Kommunikationsverbindung steht, aufweisend nachfolgende Schritte:
A) Überwachen in dem Wireless Adapter (WA1; WA2; WA3), ob im Rahmen der Kommunikation mit dem Feldgerät (FG1; FG2; FG3) eine Statusänderung des Feldgerätes (FG1; FG2; FG3) mitgeteilt wird;
B) Ereignisgesteuertes Abfragen von erweiterten Statusinformationen von dem Feldgerät (FG1; FG2; FG3) durch den Wireless Adapter (WA1; WA2; WA3), falls eine Statusänderung mitgeteilt wird; und
C) Ereignisgesteuertes Übermitteln der erweiterten Statusinformationen von dem Wireless Adapter (WA1; WA2; WA3) an die übergeordnete Kommunikationseinheit (KE) und Bereitstellen dieser erweiterten Statusinformationen durch die übergeordnete Kommunikationseinheit (KE) an ein Auswertetool nur dann, falls ein Abgleich der erweiterten Statusinformationen mit einem, spezifisch für dieses Feldgerät (FG1; FG2; FG3) angepassten Status-Muster ergibt, dass die betreffenden, erweiterten Statusinformationen auszuwerten sind, wobei der Abgleich in einer, an der Kommunikation zwischen dem Wireless Adapter (WA1; WA2; WA3) und der übergeordneten Kommunikationseinheit (KE) beteiligten Kommunikationseinheit (WA; KE) durchgeführt wird.

2. Verfahren gemäß Anspruch 1, **dadurch gekennzeichnet, dass** in dem Status-Muster für die verschiedenen, von dem zugehörigen Feldgerät (FG1; FG2; FG3) bereitstellbaren, erweiterten Statusinformationen jeweils bestimmt ist, ob diese auszuwerten sind oder nicht.

3. Verfahren gemäß Anspruch 1 oder 2, **dadurch gekennzeichnet, dass** die für ein Konfigurationstool erforderlichen Informationen zur Erstellung eines, zu dem Feldgerät (FG1; FG2; FG3) zugehörigen Status-Musters in Informationen zur Geräteintegration des Feldgerätes (FG1; FG2; FG3), insbesondere in einer Gerätebeschreibung und/oder in einem Gerätetreiber des Feldgerätes (FG1; FG2; FG3), enthalten sind.

4. Verfahren gemäß einem der vorangehenden Ansprüche, **dadurch gekennzeichnet, dass** die erweiterten Statusinformationen durch das Feldgerät (FG1; FG2; FG3) in Form einer Statusinformationen-Bitmap bereitgestellt werden, wobei durch die Belegung der Bitstellen der Statusinformationen-Bitmap der Inhalt der jeweils übermittelten, erweiterten Statusinformationen bestimmt wird, dass das Status-Muster durch eine entsprechende Muster-Bitmap gebildet wird und dass bei dem Abgleich die Statusinformationen-Bitmap mit der Muster-Bitmap verglichen wird.

5. Verfahren gemäß einem der vorangehenden Ansprüche, **dadurch gekennzeichnet, dass** das Feldgerät (FG1; FG2; FG3) durch den Wireless Adapter (WA1; WA2; WA3) mit elektrischer Leistung versorgt wird.

6. Verfahren gemäß einem der vorangehenden Ansprüche, **dadurch gekennzeichnet, dass** im Normalbetrieb zwischen dem Feldgerät (FG1; FG2; FG3) und dem Wireless Adapter (WA1; WA2; WA3) zu ersten, vorbestimmten Zeiten eine Kommunikation durchgeführt wird und zwischen dem Wireless Adapter (WA1; WA2; WA3) und der übergeordneten Kommunikationseinheit (KE) zu zweiten, vorbestimmten Zeiten eine drahtlose Übermittlung von Daten bezüglich des Feldgerätes (FG1; FG2; FG3) durchgeführt wird, und dass im Normalbetrieb der Wireless Adapter (WA1; WA2; WA3) zu Zeiten, in denen er keine Kommunikation durchführt, ausgeschaltet ist.

7. Verfahren gemäß einem der vorangehenden Ansprüche, **dadurch gekennzeichnet, dass** der Wireless Adapter (WA1; WA2; WA3) nach dem Schritt des Übermittelns der erweiterten Statusinformationen für eine vorbestimmte Zeitdauer zumindest so weitgehend aktiviert bleibt, dass durch die übergeordnete Kommunikationseinheit (KE) eine Kommunikation mit demselben initiierbar ist.

8. Verfahren gemäß einem der vorangehenden Ansprüche, **gekennzeichnet durch** nachfolgenden Schritt, der insbesondere nach dem Schritt des Übermittelns der erweiterten Statusinformationen durchgeführt wird:
Bereitstellen eines transparenten Kommunikationskanals von der übergeordneten Kommunikationseinheit (KE) über den Wireless Adapter (WA1; WA2; WA3) zu dem Feldgerät (FG1; FG2; FG3), so dass über den transparenten Kommunikationskanal eine Kommunikation direkt mit dem Feldgerät (FG1; FG2; FG3) durchführbar ist.

9. Verfahren gemäß einem der vorangehenden Ansprüche, **gekennzeichnet durch** nachfolgenden Schritt, der **durch** die übergeordnete Kommunikationseinheit (KE) nach Erhalt der erweiterten Statusinformationen durchgeführt wird:
Übermitteln einer Meldung an das Auswertetool, **durch** das erweiterte Statusinformationen des Feldgerätes (FG1; FG2; FG3) auswertbar sind.

10. Verfahren gemäß einem der vorangehenden Ansprüche, **dadurch gekennzeichnet, dass** das Auswertetool derart ausgebildet ist, dass durch dieses unter Verwendung von Informationen zur Geräteintegration des Feldgerätes (FG1; FG2; FG3), insbesondere von einer Gerätebeschreibung und/oder einem Gerätetreiber des Feldgerätes (FG1; FG2; FG3), erweiterte Statusinformationen des Feldgerätes (FG1; FG2; FG3) auswertbar sind.

11. Verfahren gemäß einem der vorangehenden Ansprüche, **dadurch gekennzeichnet, dass** der Abgleich in dem Wireless Adapter (WA1; WA2; WA3) durchgeführt wird.

12. Verfahren gemäß einem der vorangehenden Ansprüche, **dadurch gekennzeichnet, dass** der Abgleich in der übergeordneten Kommunikationseinheit (KE) durchgeführt wird.

13. Verfahren gemäß einem der vorangehenden Ansprüche, **dadurch gekennzeichnet, dass** die drahtlose Kommunikationsverbindung zwischen dem Wireless Adapter (WA1; WA2; WA3) und der übergeordneten Kommunikatiotiseinheit (KE) zumindest teilweise über ein drahtloses Fernübertragungsnetz (12) verläuft.

14. Verfahren gemäß einem der vorangehenden Ansprüche, **dadurch gekennzeichnet, dass** auf der übergeordneten Kommunikationseinheit (KE) ein Server implementiert ist, durch den Daten bezüglich einer Mehrzahl von Feldgeräten (FG1, FG2, FG3), insbesondere einer Mehrzahl von Feldgeräten (FG1, FG2, FG3) unterschiedlicher Nutzer, verwaltbar und an entsprechende Anwendungen bereitstellbar sind.

15. Wireless Adapter, an den ein Feldgerät (FG1; FG2; FG3) anschließbar und mit diesem in drahtgebundene Kommunikationsverbindung bringbar ist, wobei durch den Wireless Adapter (WA1; WA2; WA3) eine drahtlose Kommunikation durchführbar ist und wobei eine Elektronik des Wireless Adapters (WA1; WA2; WA3) derart ausgebildet ist,
dass im Einsatz überwachbar ist, ob im Rahmen der Kommunikation mit dem angeschlossenen Feldgerät (FG1; FG2; FG3) eine Statusänderung des Feldgerätes (FGI; FG2; FG3) mitgeteilt wird,
dass, falls eine Statusänderung mitgeteilt wird, ereignisgesteuert erweiterte Statusinformationen von dem angeschlossenen Feldgerät (FG1; FG2; FG3) abfragbar sind,
dass ein Abgleich der erweiterten Statusinformationen mit einem, spezifisch für das angeschlossene Feldgerät (FG1; FG2; FG3) angepassten und in dem Wireless Adapter (WA1; WA2; WA3) hinterlegbaren Status-Muster durchführbar ist und daraus bestimmbar ist, ob die betreffenden, erweiterten Statusinformationen auszuwerten sind, und
dass die erweiterten Statusinformationen nur dann von dem Wireless Adapter (WA1; WA2; WA3) drahtlos an eine, mit dem Wireless Adapter (WA1; WA2; WA3) in Kommunikationsverbindung stehende Kommunikationseinheit (KE) übermittelt werden, wenn der durchgeführte Abgleich ergibt, dass die erweiterten Statusinformationen auszuwerten sind.

## Claims

1. Procedure to operate a system comprising a field device (FG1, FG2, FG3), a wireless adapter (WA1, WA2, WA3) connected to the field device (FG1, FG2, FG3), said adapter having a wired communication connection with the field device (FG1, FG2, FG3), and a higher-order communication unit (KE), which has a wireless communication connection with the wireless adapter (WA1, WA2, WA3), said procedure comprising the following steps:
A) Monitoring in the wireless adapter (WA1, WA2, WA3) as to whether a change in the status of the field device (FG1, FG2, FG3) is communicated within the context of communication with the field device (FG1, FG2, FG3);
B) Event-controlled interrogation of extended status information of the field device (FG1, FG2, FG3) by the wireless adapter (WA1, WA2, WA3) if a change in status is communicated; and
C) Event-controlled transfer of the extended status information by the wireless adapter (WA1, WA2, WA3) to the higher-order communication unit (KE) and provision of this extended status information by the higher-order communication unit (KE) to an evaluation tool if a comparison of the extended status information with a status pattern specifically adapted for this field device (FG1, FG2, FG3) finds that the extended status information concerned needs to be evaluated, wherein the comparison is performed in a communication unit (WA; KE) that is involved in the communication between the wireless adapter (WA1, WA2, WA3) and the higher-order communication unit (KE).

2. Procedure as claimed in Claim 1, **characterized in that** the status pattern for the various extended status information data which can be provided by the corresponding field device (FG1, FG2, FG3) determines whether this particular status information should be evaluated or not.

3. Procedure as claimed in Claim 1 or 2, **characterized in that** the information necessary for a configuration tool to create a status pattern pertaining to the field device (FG1, FG2, FG3) is contained in the information regarding the integration of the field device (FG1, FG2, FG3), particularly in a device description and/or a device driver of the field device (FG1, FG2, FG3).

4. Procedure as claimed in one of the previous claims, **characterized in that** the field device (FG1, FG2, FG3) makes the extended status information available in the form of a status information bitmap, wherein the content of the particular extended status information that is transmitted is determined by the assignment of the bit positions of the status information bitmap,
**in that** the status pattern is formed by a corresponding pattern bitmap and
**in that** the status information bitmap is compared with the pattern bitmap during the comparison.

5. Procedure as claimed in one of the previous claims, **characterized in that** the field device (FG1, FG2, FG3) is supplied with electrical power by the wireless adapter (WA1, WA2, WA3).

6. Procedure as claimed in one of the previous claims, **characterized in that**, in normal operation, communication takes place between the field device (FG1, FG2, FG3) and the wireless adapter (WA1, WA2, WA3) at first, predefined times, and the wireless transmission of data regarding the field device (FG1, FG2, FG3) between the wireless adapter (WA1, WA2, WA3) and the higher-order communication unit (KE) is performed at second, predefined times, and **in that**, in normal operation, the wireless adapter (WA1, WA2, WA3) is switched off at times in which it is not communicating.

7. Procedure as claimed in one of the previous claims, **characterized in that**, after the step involving the transmission of the extended status information, the wireless adapter (WA1, WA2, WA3) remains active for a predefined time at least to the extent that communication can be initiated with the latter by means of the higher-order communication unit (KE).

8. Procedure as claimed in one of the previous claims, **characterized by** the following step which is performed, in particular, after the step involving the transmission of the extended status information:
Provision of a transparent communication channel from the higher-order communication unit (KE) to the field device (FG1, FG2, FG3) via the wireless adapter (WA1, WA2, WA3) in such a way that communication can be established directly with the field device (FG1, FG2, FG3) via the transparent communication channel.

9. Procedure as claimed in one of the previous claims, **characterized by** the following step which is performed by the higher-order communication unit (KE) after receiving the extended status information:
Transmission of a message to the evaluation tool by means of which it is possible to evaluate the extended status information of the field device (FG1, FG2, FG3).

10. Procedure as claimed in one of the previous claims, **characterized in that** the evaluation tool is designed in such a way that it permits the evaluation of extended status information of the field device (FG1, FG2, FG3) by using information on the integration of the field device (FG1, FG2, FG3), particularly a device description and/or a device driver of the field device (FG1, FG2, FG3).

11. Procedure as claimed in one of the previous claims, **characterized in that** the comparison is performed in the wireless adapter (WA1, WA2, WA3).

12. Procedure as claimed in one of the previous claims, **characterized in that** the comparison is performed in the higher-order communication unit (KE).

13. Procedure as claimed in one of the previous claims, **characterized in that** the wireless communication connection between the wireless adapter (WA1, WA2, WA3) and the higher-order communication unit (KE) is at least partially via a wireless long-distance telecommunications network (12).

14. Procedure as claimed in one of the previous claims, **characterized in that** a server is implemented on the higher-order communication unit (KE), via said server it is possible to manage data concerning a multitude of field devices (FG1, FG2, FG3), particularly a multitude of field devices (FG1, FG2, FG3) from different users, and make these data available to appropriate applications.

15. Wireless adapter to which it is possible to connect a field device (FG1, FG2, FG3) and establish a wired communication connection with said field device, wherein a wireless communication can be established via the wireless adapter (WA1, WA2, WA3), and wherein the electronics of the wireless adapter (WA1, WA2, WA3) is designed in such a way
that, during operation, it is possible to monitor whether a change in the status of the field device (FG1, FG2, FG3) is communicated in the context of communication with the connected field device (FG1, FG2, FG3),
in that, if a status change is communicated, it is possible to interrogate extended status information from the connected field device (FG1, FG2, FG3) in an event-controlled manner,
in that it is possible to perform a comparison of the extended status information with a status pattern, which is specifically adapted for the connected field device (FG1, FG2, FG3) and can be recorded in the wireless adapter (WA1, WA2, WA3), and on the basis of this comparison it is possible to determine whether the extended status information in question must be evaluated, and
in that the extended status information is only transmitted wirelessly by the wireless adapter (WA1, WA2, WA3) to a communication unit (KE) which is in communication with the wireless adapter (WA1, WA2, WA3) if the comparison that is performed finds that the extended status information should be evaluated.

## Revendications

1. Procédé destiné à l'exploitation d'un système comportant un appareil de terrain (FG1, FG2, FG3), un adaptateur sans fil (WA1, WA2, WA3) raccordé à l'appareil de terrain (FG1, FG2, FG3), lequel adaptateur est en liaison de communication filaire avec l'appareil de terrain (FG1, FG2, FG3), et une unité de communication maître (KE), qui est en liaison de communication sans fil avec l'adaptateur sans fil (WA1, WA2, WA3), lequel procédé comporte les étapes suivantes :
A) Surveillance dans l'adaptateur sans fil (WA1, WA2, WA3) si, dans le cadre de la communication avec l'appareil de terrain (FG1, FG2, FG3), un changement d'état de l'appareil de terrain (FG1, FG2, FG3) est signalé ;
B) Interrogation commandée par événement d'informations d'état étendues de l'appareil de terrain (FG1, FG2, FG3) par l'adaptateur sans fil (WA1, WA2, WA3), lorsqu'un changement d'état est signalé ; et
C) Transfert commandé par événement des informations d'état étendues depuis l'adaptateur sans fil (WA1, WA2, WA3) à l'unité de communication maître (KE) et mise à disposition de ces informations d'état étendues par l'unité de communication maître (KE) à un outil d'évaluation, uniquement s'il résulte d'une comparaison des informations d'état étendues avec un modèle d'état adapté spécifiquement pour cet appareil de terrain (FG1, FG2, FG3) la nécessité d'évaluation des informations d'état étendues concernées, la comparaison étant réalisée dans une unité de communication (WA, KE) participant à la communication entre l'adaptateur sans fil (WA1, WA2, WA3) et l'unité de communication maître (KE).

2. Procédé selon la revendication 1, **caractérisé en ce qu'**est déterminé, dans le modèle d'état pour les différentes informations d'état étendues, pouvant être mises à disposition par l'appareil de terrain (FG1, FG2, FG3) correspondant, si celles-ci doivent être évaluées ou non.

3. Procédé selon la revendication 1 ou 2, **caractérisé en ce que** les informations nécessaires à un outil de configuration pour la création d'un modèle d'état correspondant à l'appareil de terrain (FG1, FG2, FG3) sont contenues dans des informations relatives à l'intégration de l'appareil de terrain (FG1, FG2, FG3), notamment dans une description et/ou dans un pilote de l'appareil de terrain (FG1, FG2, FG3).

4. Procédé selon l'une des revendications précédentes, **caractérisé**
**en ce que** les informations d'état étendues sont mises à disposition par l'appareil de terrain (FG1, FG2, FG3) sous la forme d'une table de bits d'informations d'état, le contenu des informations d'état étendues transmises étant déterminé par l'affectation des bits de la table de bits d'informations d'état,
**en ce que** le modèle d'état est formé par une table de modèle correspondant et
**en ce que** la table de bits d'informations d'état est comparée à la table de bits de modèle dans le cadre de la comparaison.

5. Procédé selon l'une des revendications précédentes, **caractérisé en ce que** l'appareil de terrain (FG1, FG2, FG3) est alimenté en énergie électrique par l'intermédiaire de l'adaptateur sans fil (WA1, WA2, WA3).

6. Procédé selon l'une des revendications précédentes **caractérisé en ce qu'**en fonctionnement normal, une communication est réalisée en des premiers instants prédéfinis entre l'appareil de terrain (FG1, FG2, FG3) et l'adaptateur sans fil (WA1, WA2, WA3), et une transmission sans fil de données concernant l'appareil de terrain (FG1, FG2, FG3) est réalisée en des seconds instants prédéfinis entre l'adaptateur sans fil (WA1, WA2, WA3) et l'unité de communication maître (KE) et
**en ce qu'**en fonctionnement normal, l'adaptateur sans fil (WA1, WA2, WA3) est désactivé aux instants, pendant lesquels il n'effectue aucune communication.

7. Procédé selon l'une des revendications précédentes, **caractérisé en ce que** l'adaptateur sans fil (WA1, WA2, WA3) reste activé pendant une durée prédéfinie après l'étape de transmission des informations d'état étendues, au moins jusqu'à ce qu'une communication puisse être établie avec ce dernier par l'intermédiaire de l'unité de communication maître (KE).

8. Procédé selon l'une des revendications précédentes, **caractérisé par** l'étape suivante, qui est notamment exécutée après l'étape de transmission des informations d'état étendues :
Mise à disposition d'un canal de communication transparent par l'unité de communication maître (KE) via l'adaptateur sans fil (WA1, WA2, WA3) vers l'appareil de terrain (FG1, FG2, FG3), de telle sorte que puisse être établie directement avec l'appareil de terrain (FG1, FG2, FG3) une communication par l'intermédiaire du canal de communication transparent.

9. Procédé selon l'une des revendications précédentes, **caractérisé par** l'étape suivante, qui est exécutée par l'unité de communication maître (KE) après l'obtention des informations d'état étendues :
Transmission d'un message à l'outil d'évaluation, à travers lequel des informations d'état étendues de l'appareil de terrain (FG1, FG2, FG3) peuvent être évaluées.

10. Procédé selon l'une des revendications précédentes, **caractérisé en ce que** l'outil d'évaluation est conçu de telle sorte qu'il permette d'évaluer les informations d'état étendues de l'appareil de terrain (FG1, FG2, FG3) en utilisant les informations relatives à l'intégration de l'appareil de terrain (FG1, FG2, FG3), notamment d'une description et/ou d'un pilote de l'appareil de terrain (FG1, FG2, FG3).

11. Procédé selon l'une des revendications précédentes, **caractérisé en ce que** la comparaison est réalisée dans l'adaptateur sans fil (WA1, WA2, WA3).

12. Procédé selon l'une des revendications précédentes, **caractérisé en ce que** la comparaison est réalisée dans l'unité de communication maître (KE).

13. Procédé selon l'une des revendications précédentes, **caractérisé en ce que** la liaison de communication sans fil entre l'adaptateur sans fil (WA1, WA2, WA3) et l'unité de communication maître (KE) se déroule au moins partiellement via un réseau de télécommunication sans fil (12).

14. Procédé selon l'une des revendications précédentes, **caractérisé en ce que** sur l'unité de communication maître (KE) est implémenté un serveur, par l'intermédiaire duquel des données concernant une majorité d'appareils de terrain (FG1, FG2, FG3), notamment une majorité d'appareils de terrain (FG1, FG2, FG3) d'utilisateurs différents, peuvent être gérées et mises à disposition à des applications correspondantes.

15. Adaptateur sans fil, auquel peut être raccordé un appareil de terrain (FG1, FG2, FG3) et être mis en communication avec celui-ci au moyen d'une liaison sans fil, une communication sans fil pouvant être réalisée par l'adaptateur sans fil (WA1, WA2, WA3), et une électronique de l'adaptateur sans fil (WA1, WA2, WA3) étant conçue de telle sorte qu'il soit possible, en fonctionnement, de signaler un changement d'état de l'appareil de terrain (FG1, FG2, FG3) dans le cadre de la communication avec l'appareil de terrain (FG1, FG2, FG3) raccordé,
qu'il soit possible, au cas où un changement d'état est signalé, d'interroger de façon commandée par événement les informations d'état étendues de l'appareil de terrain (FG1, FG2, FG3) raccordé,
qu'il soit possible d'effectuer une comparaison des informations d'état étendues avec un modèle d'état adapté spécifiquement pour l'appareil de terrain (FG1, FG2, FG3) raccordé et enregistré dans l'adaptateur sans fil (WA1, WA2, WA3), et qu'il soit possible d'en déterminer si les informations d'état étendues concernées doivent être évaluées, et
que les informations d'état étendues sont transmises sans fil par l'adaptateur sans fil (WA1, WA2, WA3), à une unité de communication (KE) qui est en liaison de communication avec l'adaptateur sans fil (WA1, WA2, WA3), uniquement si le résultat de la comparaison réalisée indique que les informations d'état étendues doivent être évaluées.
